# EUROPÄISCHE PATENTSCHRIFT

(11) **EP 0 578 721 B1**
(45) Veröffentlichungstag und Bekanntmachung des Hinweises auf die Patenterteilung: **09.08.1995**
(21) Anmeldenummer: 92908383.0
(22) Anmeldetag: 02.04.1992
(51) Int. Cl.: H01F 27/28, H02K 3/14, H01B 7/30

(54) **DRILLEITER**
TWISTED CONDUCTOR
CABLE CONDUCTEUR TORSADE

(30) Priorität: 05.04.1991 AT 726/91
(43) Veröffentlichungstag der Anmeldung: 19.01.1994
(73) Patentinhaber: ASTA Elektrodraht GmbH, A-2755 Oed/Bez. Wiener Neustadt (AT)
(72) Erfinder: JÄGERSBERGER, Kurt, A-2763 Pernitz (AT)
(74) Vertreter: Krause, Peter
(86) Internationale Anmeldenummer: AT9200045
(87) Internationale Veröffentlichungsnummer: WO9217891

(56) Entgegenhaltungen:
- DE-A- 2 045 289
- DE-B- 1 016 819
- US-A- 4 173 747
- PATENT ABSTRACTS OF JAPAN vol. 2, no. 1 (E-77)(9564) 5. Januar 1978, & JP-A-52 115 317

## Beschreibung

Die Erfindung betrifft einen Drilleiter für Wicklungen elektrischer Maschinen und Geräte, insbesondere Transformatoren, der aus einzelnen lackisolierten flachen Teilleitern zu einem rechteckigen Querschnitt zusammengesetzt ist, wobei die Teilleiter an den beiden Flachseiten des Querschnitts im entgegengesetzten Sinne schräg verlaufen und an den Schmalseiten des Querschnitts durch eine Kröpfung von einer Seite auf die andere übertreten und die übereinander angeordneten Teilleiter im Querschnitt mit Abstand nebeneinander angeordnet sind.

Der Einsatz von verdrillten Wicklungsstäben, sogenannten Röbelstäben, im Elektromaschinenbau ist bekannt (siehe z.B. die DE-B-1016819). So werden derartige Wicklungsstäbe zur Unterdrückung bzw. Verminderung der Wirbelstromverluste in den Nutstäben insbesondere großer elektrischer Maschinen verwendet. Um nun im Inneren des Wicklungsstabes, also zwischen den beiden durch Einzelleiter gebildeten Flachseiten, Räume für das axiale Hindurchleiten eines Kühlmittels zu schaffen wurden in den Zwischenraum der beiden Teilleiterstapel eigene Kühlkanäle durch entsprechende Anordnung der Teilleiter oder eigens geformte Rohre angeordnet. Zur Verfestigung des Wicklungsstabes wurde dieser mit einer Glas-Glimmerumhüllung versehen. Diese Umhüllung diente auch gleichzeitig als Kühlkanalabdichtung.

Der Einsatz von Drilleitern als Wicklungsmaterial im Transformatorenbau ist ebenso seit langem bekannt. Dabei bestehen Drilleiter üblicherweise aus einer ungeraden Anzahl von lakkierten Flachdrähten aus Kupfer oder Aluminium, die nach einem speziellen System verseilt bzw. verröbelt werden. Bei diesem Vorgang wandert jeweils ein Leiter oben und ein Leiter unten regelmäßig von einem Leiterstapel zu dem anderen. Das gesamte Leiterbündel wird mit einer entsprechend den Anforderungen mehr oder minder dicken Papierisolierung versehen, wobei diese Papierumspinnung einerseits als zusätzliche Isolierung entsprechend der zu erzielenden Spannungsfestigkeit dient, andererseits zum Zusammenhalt des Leiterbündels unerläßlich ist. Zur zusätzlichen Bündelstabilität wird eine Preßspanzwischenlage längslaufend zwischen den Leiterstapeln angeordnet.

Beim Verwickeln von derartigen Drilleitern werden nun zwischen den Windungen Distanzplättchen eingelegt, um einen Ölkanal zur besseren Kühlung der Wicklung zu bilden. Diese Distanzplättchen weisen eine Dicke von ca. 5 mm auf. Rein theoretisch könnte diese Dicke vermindert werden. Durch die den Drilleiter umhüllende Papierisolation muß jedoch diese Dicke gewählt werden. Die Papierisolation hat nämlich die Eigenschaft, daß sie sich quasi von der Flachseite des Drilleiters löst und aufgebauscht in den Kühlkanal hineinragt. Sie reduziert also den Kühlkanalquerschnitt. Ferner treten auch im Bereich vor und nach den Distanzplättchen Kühlmittelstaus durch die Taschenbildung auf. Es ist also eine schlechte Kühlmittelzirkulation gegeben.

Aus der EP-A-167 896 ist eine Scheibenspulenwicklung für Transformatoren bekannt. Bei dieser Wicklung werden Distanzplättchen für die Bildung radialer Kühlkanäle verwendet. Diese Distanzplättchen sind zwischen den Windungen angeordnet und werden beim Wicklungsaufbau händisch eingelegt. Es ergeben sich darüberhinaus auch die weiter oben aufgezeigten Nachteile.

Ferner ist aus der EP-A-133 220 ein elektrischer Leiter mit Teilleiter-Transposition nach Roebel bekannt, der aus insbesondere sechs Teilleitern bzw. Elementen verseilt ist. Diese Elemente werden um ein Vierkantrohr derart angeordnet, daß das Vierkantrohr als der Kühlkanal dient. Für eine bessere Kühlmittelzirkulation mußten wieder die bereits oben mit ihren Nachteilen zitierten Distanzplättchen verwendet werden.

Aufgabe der Erfindung ist es, einen Drilleiter der eingangs zitierten Art zu schaffen, der den Bedürfnissen der Maschinen- und Gerätekonstrukteure Rechnung trägt und eine höhere Ausnutzung des Materials bei gleichzeitiger Verringerung der Baugrößen erlaubt.

Der erfindungsgemäße Drilleiter ist dadurch gekennzeichnet, daß im Abstandsraum im Bereich der Kröpfung Zwischenstücke angeordnet sind, sodaß ein Kühlkanal für den Kühlmitteldurchtritt in radialer Richtung gegeben ist.

Mit der Erfindung ist es erstmals möglich, einen günstigeren Wicklungsfüllfaktor zu erreichen, wodurch die Bauhöhe der elektrischen Maschine bzw. des elektrischen Gerätes, vorzugsweise des Transformators, reduziert wird. Ferner wird durch den Drilleiter gemäß der Erfindung auch die Wickelzeit reduziert, da das zeitraubende Einfügen von Distanzplättchen zur Bildung von Ölkanälen zwischen den Windungen beim Wickelvorgang wegfällt.

Ein im Transformatorenbau nicht unwesentlicher Vorteil ist durch den erfindungsgemäßen Drilleiter auch gegeben. Durch den Abstandsraum zwischen den übereinanderliegenden Teilleitern werden die Kröpfstellen entlastet. Dadurch, daß der Druck auf die Kröpfstellen durch den Platzmangel wegfällt, wird der Isolationslack der Teilleiter nicht beansprucht, sodaß eine weit verringerte Teilleiterschlußgefahr die Folge ist.

Nach einem weiteren Merkmal der Erfindung ist zur Umhüllung eine großmaschige, mit teilvernetzten Epoxidharz vorimprägnierte Glasgewebebandage vorgesehen. Um den Zusammenhalt des Leiterbündels zu gewährleisten und nach Wärmebehandlung die mechanische Stabilität des Drilleiters zu erhöhen, wird ein geeignetes Netzgeflecht vorgesehen, das einerseits die entsprechend benötigte Zugfestigkeit besitzt, andererseits das Trafoöl möglichst ungehindert an den Bündelleitern vorbeiströmen läßt.

Gemäß einer besonderen Ausgestaltung der Erfindung ist die Umhüllung nur im Bereich der Kröpfung vorgesehen. Wie bereits erwähnt, müssen herkömmliche Drilleiter, auch wenn sie für Niederspannungswicklungen eingesetzt werden, aus Gründen des Bündelzusammenhalts mit einer Papierisolierung versehen werden, die bei fertiggepreßter Wicklung abhängig von der Bündelgeometrie durch Aufbauschung des Papiers zwischen den Distanzplättchen den Wickelspalt bzw. Ölkanal zwischen den Windungen verringert. Kriterium dieser Erfindung ist es, einen Drilleiter mit einem Kühlkanal zwischen den Teilleiterstapeln maschinell herzustellen, wobei die überkreuzenden Teilleiter oben und unten am Bündel den radialen Kühlkanal, erzielt durch die Distanzplättchen nicht verschließen.

Generell muß noch bemerkt werden, daß eine Umhüllung der Drilleiter gemäß der vorliegenden Erfindung die Eigenschaft aufweist, daß nach ihrer Aushärtung keinerlei Aufbauschungen mehr möglich sind.

Gemäß einem ganz besonderen Merkmal der Erfindung sind die Zwischenstücke mit Epoxidharz bestrichen bzw. weisen ein mit teilvernetzten Epoxidharz vorimprägniertes Glasfaserflies auf. Der Vorteil einer derartigen Ausgestaltung liegt auf der Hand. Die Umhüllung wird nicht mehr vorzusehen sein, da sich der Bündelzusammenhalt nach dem Aushärten des Epoxidharzes durch die quasi Verklebung der Zwischenstücke mit den Teilleiterstapeln ergibt.

Die Erfindung wird an Hand von in der Zeichnung dargestellten Ausführungsbeispielen näher erläutert. Fig. 1 zeigt eine Draufsicht auf die Flachseite eines Drilleiters, Fig. 2 eine Draufsicht auf die Schmalseite und Fig. 3 einen Querschnitt des Drilleiters.

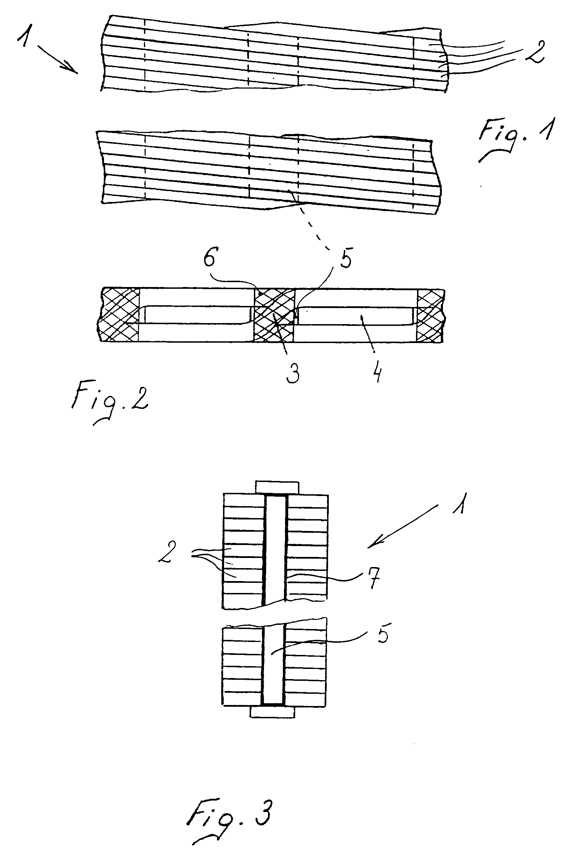

Gemäß der Fig. 1 ist die Flachseite eines Drilleiters 1 dargestellt, wobei die Teilleiter übereinander angeordnet sind. Dabei ist es an sich bekannt, daß der Drilleiter aus bis zu zirka 80 Teilleitern besteht. Bei der Verseilung der Teilleiter zum Drilleiter, die maschinell erfolgt, wechselt aus den zwei Teilleiterstapeln jeweils der oberste und der unterste Teilleiter 2 in den anderen Teilleiterstapel über, wobei vorzugsweise die Teilleiter um jeweils die halbe Schrittlänge versetzt werden. Diese Verformung für das Übertreten des Teilleiters 2 von einem Teilleiterstapel in das andere Teilleiterstapel (Fig. 2) ist die Kröpfung 3. Nach der Kröpfung 3 der Teilleiter 2 verlaufen sie schräg.

Entsprechend der Fig. 2 weisen die Teilleiter 2 eine stärkere Kröpfung 3 auf, sodaß die beiden Teilleiterstapel mit einem Abstandsraum 4 zueinander parallel liegen. In diesem Abstandsraum 4 ist im Bereich der Kröpfung 3 ein Zwischenstück 5 angeordnet. Es ergibt sich also für den Drilleiter 1 ein Kühlkanal für einen Kühlmitteldurchtritt in radialer Richtung.

Um das Zusammenhalten des Teilleiterbündels zu einem Drilleiter 1 zu gewährleisten, ist im Bereich der Kröpfung 3 eine Umhüllung 6 vorgesehen. Diese Umhüllung 6 ist eine großmaschige mit teilvernetzten Epoxidharz vorimprägnierte Glasgewebebandage.

Gemäß der Fig. 3 weist der Drilleiter 1 in seinem Abstandsraum zwischen den aus Teilleitern 2 gebildeten Teilleiterstapeln ein Zwischenstück 5 auf. Dieses Zwischenstück 5 ist an seiner Oberfläche mit einem Glasfaserflies 7 versehen, wobei dieses Glasfaserflies 7 mit einem teilvernetzten Epoxidharz vorimprägniert ist.

Durch die Verwendung dieses Drilleiters 1 gemäß der Fig. 3 ergeben sich für die Wicklungserstellung im Transformatorenbau immense Vorteile.

Bei der Herstellung einer Transformatorenwicklung mit einem herkömmlichen Drilleiter, der eine kontinuierliche Papierisolierung und eine zwischen den Teilleiterstapeln vorgesehene längslaufende Preßspanzwischenlage aufweist, müssen händisch für die Schaffung der Ölkanäle Distanzplättchen eingelegt werden. Ferner wird bei der Bemessung der Dicke der Distanzplättchen das bereits erwähnte Aufbauschen des Isolationspapieres berücksichtigt.
Findet nun der Drilleiter 1 gemäß einer Fig. 1 bis 3 Anwendung, so kann die Bauhöhe des Transformators aufgrund des besseren Füllfaktors reduziert werden. Der bessere Füllfaktor ergibt sich einerseits aus dem Wegfall der Papierisolation selbst sowie dem Wegfall der längslaufenden Preßspanzwischenlage. Darüberhinaus kann auch die Dicke der Zwischenstücke 5 geringer als die Dicke der Distanzplättchen angesetzt werden, da die bei den Distanzplättchen eingerechnete Papieraufbauschung nicht mehr gegeben ist.

Für den Transformatorenkonstrukteur hat der Drilleiter 1 also drei unübersehbare Vorteile. Einerseits wird durch die Verwendung die Gesamtbauhöhe des Trafos bei unveränderter Leistung reduziert und anderseits fällt ein Arbeitsgang, nämlich das händische Einlegen der Distanzplättchen, weg. Durch eine derartige Konstruktion wird die Kühlleistung wesentlich verbessert, da das Kühlmittel direkt am lackisolierten Leiter vorbeiströmt. Dies bedeutet meist auch die Reduktion der Mehrfach-Lagenwicklung auf eine Ein-Lagenwicklung.

## Patentansprüche

1. Drilleiter (1) für Wicklungen elektrischer Maschinen und Geräte, insbesondere Transformatoren, der aus einzelnen lackisolierten flachen Teilleitern (2) zu einem rechteckigen Querschnitt zusammengesetzt ist, wobei die Teilleiter an den beiden Flachseiten des Querschnitts im entgegengesetzten Sinne schräg verlaufen und an den Schmalseiten des Querschnitts durch eine Kröpfung (3) von einer Seite auf die andere übertreten und die übereinander angeordneten Teilleiter (2) im Querschnitt mit Abstand nebeneinander angeordnet sind, dadurch gekennzeichnet, daß im Abstandsraum (4) im Bereich der Kröpfung (3) Zwischenstücke (5) angeordnet sind, sodaß ein Kühlkanal für den Kühlmitteldurchtritt in radialer Richtung gegeben ist.

2. Drilleiter nach Anspruch 1, dadurch gekennzeichnet, daß zur Umhüllung (6) eine großmaschige, mit teilvernetzten Epoxidharz vorimprägnierte Glasgewebebandage vorgesehen ist.

3. Drilleiter nach Anspruch 2, dadurch gekennzeichnet, daß die Umhüllung (6) nur im Bereich der Kröpfung (3) vorgesehen ist.

4. Drilleiter nach einem der Ansprüche 1 bis 3, dadurch gekennzeichnet, daß die Zwischenstücke (5) mit Epoxidharz bestrichen bzw. ein mit teilvernetzten Epoxidharz vorimprägniertes Glasfaserflies (7) aufweisen.

## Claims

1. Stranded conductor (1) for the winding of electrical machines or apparatus, especially for transformers, which is composed of individual flat, varnish-insulated sub-conductors (2) which are combined to a rectangular cross-section, whereby on the two flat sides of the cross-section the sub-conductors extend along oppositely inclined orientations and on the slim sides of the cross-section cross over from one side to the other by means of a bent portion (3), and whereby the sub-conductors (2) which are arranged one above the other, are arranged in the cross section in side-by-side relationship, spaced from each other, characterized in that in the interstice (4) in the region of the bent portion (3) are arranged intermediate elements (5), thus that a cooling channel is formed in radial direction for the passage of a cooling medium.

2. The stranded conductor of claim 1, characterized in that a band of wide-meshy glass tissue pre-impregnated with partially reticulated epoxy resin is provided as an envelope (6).

3. The stranded conductor of claim 2, characterized in that the envelope (6) is provided only in the region of the bent portion (3).

4. The stranded conductor of any one of claims 1-3, characterized in that the intermediary elements (5) are painted with epoxy resin or in that they comprise a glass fiber tissue (7) which is pre-impregnated with partially reticulated epoxy resin.

## Revendications

1. Conducteur torsadé (1) pour des enroulements de machines et appareils électriques, en particulier transformateurs, composés par ensemble de conducteurs partiels (2) plats, individuels, isolés par un vernis, pour obtenir une section transversale rectangulaire, les conducteurs partiels s'étendant obliquement, en sens inverse, sur les deux faces plates de la section transversale et passant d'un côté à l'autre par le biais d'un coudage (3) sur les petits côtés de la section transversale et les conducteurs partiels (3) disposés les uns au-dessus des autres étant disposés à distance les uns des autres lorsque l'on observe la section transversale, caractérisé en ce que dans l'espacement (4) sont disposés dans la zone de la coudure (3) des pièces intermédiaires (5), ainsi qu'un canal de refroidissement destinés au passage d'un fluide de refroidissement en direction radiale.

2. Conducteur torsadé selon la revendication 1, caractérisé en ce que, pour assurer le gainage (6), est prévu un bandage à tissu à base de verre, à grosses mailles, pré-imprégné d'une résine époxy partiellement réticulée.

3. Conducteur torsadé selon la revendication 2, caractérisé en ce que le gainage (6) n'est prévu que dans la zone du coudage (3).

4. Conducteur torsadé selon l'une des revendications 1 à 3, caractérisé en ce que les pièces intermédiaires (5) sont enduites de résine époxy, respectivement présentent un matelas de fibres de verre (7) pré-imprégné d'une résine époxy partiellement réticulée.
